# EUROPEAN PATENT SPECIFICATION

(11) **EP 2 726 702 B1**
(45) Date of publication and mention of the grant of the patent: **26.07.2017**
(21) Application number: 12733030.6
(22) Date of filing: 27.06.2012
(51) Int. Cl.: E21B 41/00, E21B 47/08, E21B 4/18, E21B 47/09

(54) **DOWNHOLE TOOL FOR DETERMINING LATERALS**
BOHRLOCHWERKZEUG ZUR BESTIMMUNG VON SEITENKANÄLEN
OUTIL D'EXTRACTION POUR DÉTERMINER LES DÉRIVATIONS DE CONDUITE

(30) Priority: 30.06.2011 EP 11172151
(43) Date of publication of application: 07.05.2014
(73) Proprietor: Welltec A/S, 3450 Allerød (DK)
(72) Inventor: HALLUNDBÆK, Jørgen, DK-3230 Græsted (DK); KJÆRSGAARD-RASMUSSEN, Jimmy, DK-3460 Birkerød (DK)
(74) Representative: Hoffmann Dragsted A/S
(86) International application number: PCT/EP2012/062419
(87) International publication number: WO 2013/000938

(56) References cited:
- EP-A1- 2 317 070
- WO-A1-98/02638
- WO-A1-2008/068561
- WO-A2-98/12418
- US-A- 4 867 264
- US-A- 5 195 588

## Description

### Field of the invention

The present invention relates to a downhole tool for determining laterals in a borehole wall or a borehole casing, comprising a tool housing extending along a longitudinal axis and having a circumference perpendicular to the longitudinal axis and adapted to be lowered into a well, and a plurality of sonic transceivers, each sonic transceiver transmitting sonic signals from the housing and receiving sonic signals reflected from the borehole wall or borehole casing in a predefined angular segment. Furthermore, the invention relates to a downhole system and a method of determining a position of a lateral.

### Background art

Wellbores with multiple forked branches and laterals reduce overall costs, increase production and improve reservoir drainage. These types of wells can increase recoverable reserves, make reservoirs easier to manage, and are growing in popularity. However, constructing complicated well profiles is challenging and risky. The latest applications and system developments are convincing operators that multilateral advantages outweigh the disadvantages and therefore the need for navigating tools in multilateral wells is currently increasing. WO 2008/068561 discloses such a navigating tool. Because of the capability to more thoroughly drain reservoirs vertically and horizontally, recoverable reserves per well and per field are increased considerably while both capital and operating costs per well and per field are minimised. In fact, the cost of achieving the same degree of drainage with conventional wells would be prohibitive in most cases, especially in the case of e.g. deepwater subsea developments. Multilateral wells allow costs to be amortised over several reservoir penetrations and have in some cases eliminated the need for infill drilling. In heterogeneous reservoirs with layers, compartments or randomly oriented natural fractures, more pockets of oil and gas can be exploited and an increased number of fractures can be intersected by drilling multilateral wells. Visual representations using light, lasers, infrared light etc. have the disadvantage of being limited during drilling due to mud flow or during production due to oil-bearing liquids. The use of sonic measurements for positioning and measurement of fluid velocities etc. is therefore increasingly being developed for these purposes. However, determination of laterals is problematic since sonic measurements typically take advantage of repeating pattern measurements with knowledge of Doppler effects, which cannot be applied to the determination of laterals.

### Summary of the invention

It is an object of the present invention to wholly or partly overcome the above disadvantages and drawbacks of the prior art. More specifically, it is an object to provide an improved downhole tool capable of determining downhole laterals in multilateral wells.

The above objects, together with numerous other objects, advantages, and features, which will become evident from the below description, are accomplished by a solution in accordance with the present invention by a downhole tool for determining laterals in a borehole wall or a borehole casing, comprising:
- a tool housing extending along a longitudinal axis and having a circumference perpendicular to the longitudinal axis and adapted to be lowered into a well, and
- a plurality of sonic transceivers, each sonic transceiver transmitting sonic signals from the housing and receiving sonic signals reflected from the borehole wall or borehole casing in a predefined angular segment,
wherein the plurality of sonic transceivers are arranged along the circumference of the tool housing having a mutual distance and are capable of transmitting sonic signals radially away from the tool housing in an entire central angle of 360 degrees towards the borehole wall or borehole casing and wherein, during use, one sonic transceiver, during a pulse time, transmits a sonic signal in the predefined angular segment of that sonic transmitter, and wherein one sonic transceiver, during a subsequent echo time, receives a reflected sonic signal from the borehole wall or borehole casing, and wherein an absence of the received reflected sonic signal, during the subsequent echo time, indicates a lateral.

The downhole tool according to the present invention may further comprise a magnetic profiler for measuring a magnetic profile of the borehole casing.

Said magnetic profiler may be capable of applying a magnetic field and measuring a change in the magnetic field.

Further, the change in the magnetic field may be measured as a function of an interaction between the borehole casing and the magnetic field.

In one embodiment of the invention, the sonic transceivers may be arranged equidistantly along the circumference of the tool housing, having a fixed mutual distance.

Further, the sonic transceivers may be arranged along the circumference of the tool housing in a regular pattern.

Said sonic transceivers may be arranged along the circumference of the tool housing in a regular pattern, such as a zigzag pattern.

In another embodiment, more than one transceiver may be receiving during the echo time.

Also, more than one transceiver may be transmitting during the pulse time.

Furthermore, the downhole tool may comprise at least four sonic transceivers, each transceiver being capable of transmitting sonic signals covering at least one fourth of the entire central angle such as at least eight sonic transceivers, each transceiver being capable of transmitting sonic signals covering at least one eighth of the entire central angle.

Moreover, the downhole tool may comprise an array of sonic transceivers capable of transmitting sonic signals covering the entire central angle.

Additionally, a plurality of sonic signals may be transmitted during the pulse time in different predefined angular segments.

Also, a plurality of sonic signals may be transmitted having different predefined amplitudes and phases.

The downhole tool according to the present invention may further comprise a plurality of second sonic transceivers arranged at a longitudinal distance away from the plurality of sonic transceivers and arranged along the circumference of the tool housing having a mutual distance and being capable of transmitting sonic signals radially away from the tool housing in an entire central angle of 360 degrees towards the borehole wall or borehole.

The present invention also relates to a downhole system comprising:
- a wireline,
- a tool string,
- a driving unit,
- a lateral locator, and
- an operational tool for operating in a lateral,
wherein the system further comprises a downhole tool for determining laterals as described above.

The downhole system as described above may further comprise a magnetic profiler.

In another embodiment, the operational tool may be a logging tool, a key tool, a milling tool or a drilling tool.

Said downhole system may further comprise a positioning tool, such as a casing collar locator.

Also, the present invention relates to a method of determining a position of a lateral, comprising the steps of:
- moving the downhole tool to a first position in the borehole,
- conducting a series of pulse/echo measurements comprising:
   - transmitting a sonic signal by a sonic transceiver in a first angular segment during a first pulse time,
   - recording if a reflected sonic signal is received by a sonic transceiver during a first echo time,
   - transmitting a sonic signal by a neighbouring sonic transceiver in a second angular segment during a second pulse time, and
   - recording if a reflected sonic signal is received by a sonic transceiver during a second echo time,
- continuing the series of pulse/echo measurements at the first position until all angular segments along the entire circumference of the tool housing have been investigated using the plurality of sonic transceivers,
- moving the downhole tool to a second position in the borehole,
- conducting a second series of pulse/echo measurements at the second position in the borehole, and
- determining the position of the lateral from the absence of received reflected sonic signals in a subset of the measurements, indicating the position of the lateral.

Said method may further comprise the step of recording a magnetic profile for each recording by the sonic transceiver.

Additionally, the method described above may further comprise the step of performing a plurality of measurements using said method and subsequently combining several recordings by the sonic transceiver having matching recorded magnetic profiles.

The method described above may further comprise the step of inserting an operational tool into the lateral.

Finally, the method as described above may further comprise a step of forcing the downhole tool into the lateral with a lateral locator tool.

### Brief description of the drawings

The invention and its many advantages will be described in more detail below with reference to the accompanying schematic drawings, which for the purpose of illustration show some non-limiting embodiments and in which
Fig. 1 shows a downhole tool string with a tool for determining laterals,
Fig. 2 shows a cross-sectional view of a tool for determining laterals,
Fig. 3a shows graphical representations of the data coming from a tool for determining laterals to visualise the position of a lateral having three different numbers of transceivers with tool,
Fig. 3b shows a tool corresponding to the graphical representations of the data in Fig. 3a having a low number of transmitters,
Fig. 3c shows graphical representations of the data coming from a tool having more transceivers than the tool of Fig. 3b,
Fig. 3d shows a tool corresponding to the graphical representations of the data in Fig. 3c,
Fig. 3e shows graphical representations of the data coming from a tool having more transceivers than the tool of Fig. 3d,
Fig. 3f shows a tool corresponding to the graphical representations of the data in Fig. 3e,
Fig. 4 shows a downhole tool string with a tool for determining laterals comprising a second set of sonic transceivers, and
Fig. 5 shows a downhole tool string with a tool for determining laterals comprising a driving unit and a lateral locator tool.

All the figures are highly schematic and not necessarily to scale, and they show only those parts which are necessary in order to elucidate the invention, other parts being omitted or merely suggested.

### Detailed description of the invention

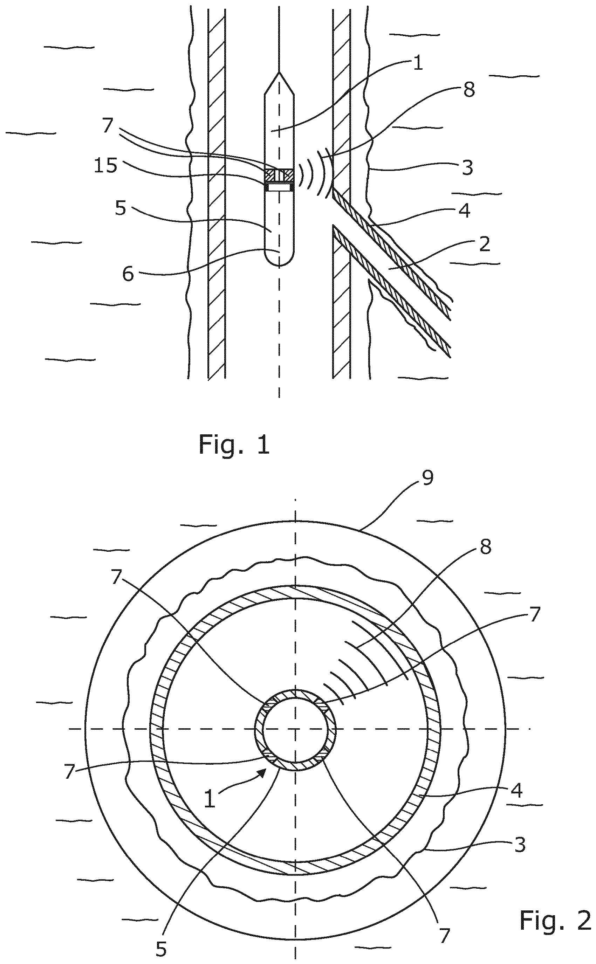

Fig. 1 shows a downhole tool 1 for determining laterals 2 in a borehole wall 3 in an openhole well or a borehole casing 4 in a cased well. The downhole tool comprises a tool housing 5 extending along a longitudinal axis 6 and a plurality of sonic transceivers 7, each sonic transceiver transmitting sonic signals 8 from the housing 5 towards the borehole wall 3 or the borehole casing 4 and receiving sonic signals 8 reflected from the borehole wall 3 or borehole casing 4. In order to obtain knowledge of the exact position of the downhole tool in the well, a magnetic profiler 15 may be placed next to the sonic transceivers 7. The magnetic profiler 15 is a sensor tool designed to help position the downhole tool. The signal comes from measuring a magnetic field which is distorted by the steel casing. Characteristic spikes or signatures show when the tool passes any significant feature. These characteristics are repeatable and can be used to recognise and compare features, resulting in the provision of knowledge of the exact position of the downhole tool in the well. Simultaneously, the velocity of the tool may be calculated by correlating buffered signals from neighbouring magnetic sensors. The calculated velocities may be combined to a single velocity estimate and then integrated to obtain the position. In some downhole environments, it may be crucial to gain precise knowledge of the position of the downhole tool in order to be able to extract useful information using the sonic transceivers, since several passes of a site of interest may be required to achieve sufficient information from the sonic transceivers which again requires precise knowledge of the position to ensure correlating values of the recordings made by the sonic transceivers. The correlation between magnetic and sonic measurements may be referred to as data fusion between the magnetic and sonic data. Data fusion between signals recorded by the sonic transceivers 7 and the magnetic profiler 15 may be used for alignment of consecutive measurements, thereby minimising errors resulting from differences in a measured depth of the well.

Fig. 2 shows how the plurality of sonic transceivers 7 are arranged along the circumference of the tool housing 5 having a mutual distance and are capable of transmitting sonic signals 8 radially away from the tool housing 5 in a predefined angular segment 9 in an entire central angle of 360 degrees towards the borehole wall 3 or borehole casing 4. During use, one transceiver 7 transmits a sonic signal 8 during a pulse time in the predefined angular segment 9 of that sonic transceiver 7, and during a subsequent echo time, one sonic transceiver 7 receives a reflected sonic signal 8 from the borehole wall 3 or borehole casing 4, and an absence of the received reflected sonic signal 8 during the subsequent echo time indicates the lateral 2. This is due to the fact that when there is no casing wall, the signal cannot be reflected and the signal fades.

The sonic transceivers 7 may be arranged equidistantly along the circumference of the tool housing 5 to provide for symmetric measurements of the surrounding borehole wall 3 or borehole casing 4 and divide the annular space between the tool housing and the casing into predefined angular segments 9 of equal size.

To increase the reliability of the measurements, several of the transceivers may be receiving during the echo time to ensure that reflected sonic signals will always be received by at least one of the transceivers. Sonic signals are highly scattered in a downhole environment due to the symmetry of nearby hard surfaces, rough surfaces of the casing or borehole wall and other effects altering the paths of the sonic signals. The reflected signals are therefore received by transceivers located both nearby and far away from the transmitting transceiver, e.g. on the other side of the housing. By receiving reflected signals using several transceivers, the redundancy of the system will be improved. Receiving with several transceivers may be done by simultaneous "listening" with several transceivers or by doing a series of measurements in which one transceiver is used to transmit signals and several transceivers are used to receive signals one at a time.

Furthermore, if the physical conditions in the borehole allow, several transceivers may be used simultaneously to transmit signals. Physical conditions which may be appropriate for these types of measurements may be a situation in which the downhole tool 1 fills up nearly the entire annular space in the borehole. Under these conditions, it may be possible to do isolated measurements on several sides of the tool housing without interfering with the other measurements. In this way, measurement time may be drastically decreased, e.g. reduced by half by running two simultaneous series of measurements with transceivers placed diagonally on two sides of the tool housing 5.

Since space is very limited when working downhole and information stream towards the surface is also limited, the computational power needed to conduct useful measurements downhole is normally minimised as much as possible. As both spatial requirements for computational power decreases and the ability to send information to the surface increases, the problem of computational power downhole is becoming less and less problematic. However, the electronic circuits of the transducers in itself represent a problem due to their volume and the related spatial requirements. The use of four to ten transceivers placed equidistantly along the circumference has therefore proven, by experiments, to be sufficient for the determination of laterals without generating too much data, which has to be processed downhole or sent to the surface and furthermore without taking up too much space downhole for electronic circuits of the transducers. Sonic transceivers covering smaller angular segments are placed appropriately to cover the full centre angle of 360 degrees of the borehole.

Due to increasing performances and minimisation of computers as well as due to computational power in general today, arrays of transceivers covering the entire central angle and even being resolved along the longitudinal axis of the tool may prospectively be advantageous if the electronic circuits of the transducers or transducer arrays may be reduced in size and thereby also provide increased resolution in the determination of laterals.

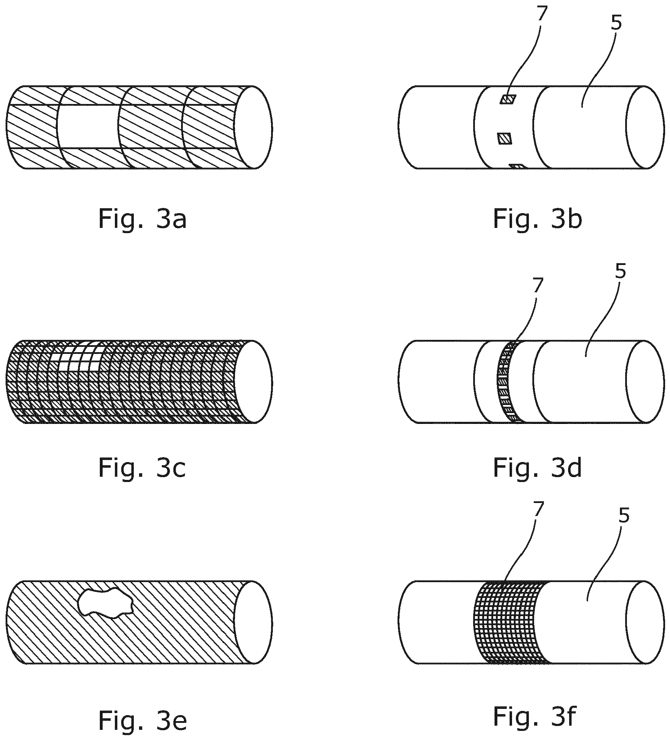

Fig. 3a shows a graphical cylindrical representation of the data coming from a corresponding downhole tool 1 shown in Fig. 3b for determining laterals 2 to visualise the position of the lateral 2 for the user. Each square on the cylindrical representation corresponds to one measurement at one given depth in the well. The downhole tool 1 is moved down through the well along the longitudinal axis 6. At a given depth in the well, a series of measurements using the plurality of sonic transceivers 7 are made to investigate the surroundings of the downhole tool at that specific depth. Each of the series of measurements corresponds to one ring of squares on the cylindrical representation.

Fig. 3c shows a graphical cylindrical representation of the data coming from a corresponding downhole tool 1 shown in Fig. 3d, which is capable of determining laterals 2 with an increased resolution. The increased resolution may be obtained by placing a greater number of sonic transceivers along the circumference of the housing, which increases the resolution by decreasing the resolvable angular segments. Furthermore, the resolution may be increased along the longitudinal axis by moving the downhole tool in smaller steps along the longitudinal axis.

Fig. 3e shows a graphical cylindrical representation of the data coming from a corresponding downhole tool 1 shown in Fig. 3f, which is capable of determining laterals 2 with an even higher resolution. The increased resolution may be obtained by arranging arrays of transceivers such as an ultrasonic transducer array along the circumference of the tool housing. The resolution along the longitudinal axis may be equally increased by such arrays if two-dimensional arrays are arranged along the circumference of the tool housing providing resolution in both an angular direction and the longitudinal direction.

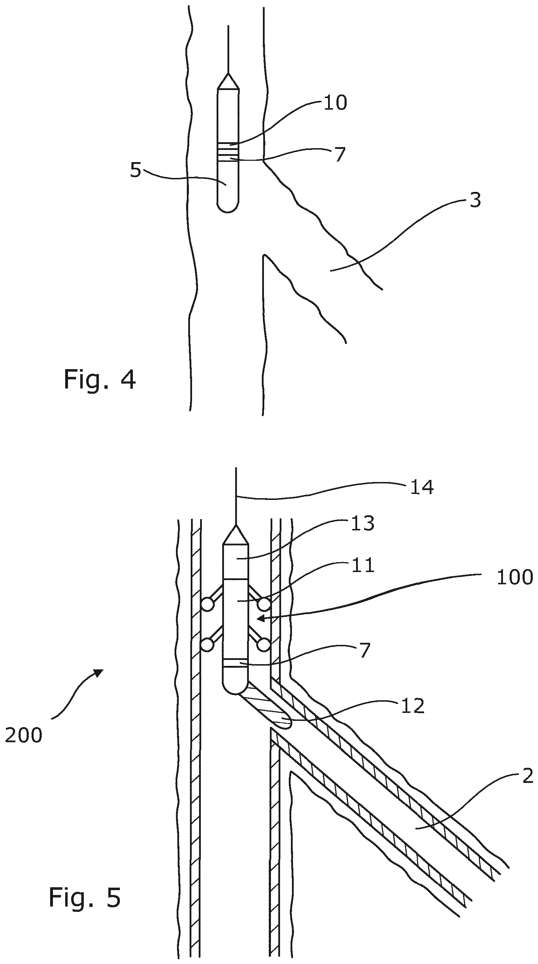

Fig. 4 shows a downhole tool 1 in a borehole wall 3 comprising a lateral 2 without a borehole casing 4. The downhole tool further comprises a second plurality of sonic transceivers 10. Arranging a second plurality of sonic receivers 10 has the advantage of helping the redundancy of the system, such that the tool may still function in case of breakdown of the plurality of sonic transceivers. Furthermore, the second plurality of transceivers may provide a downhole tool 1 capable of determining a lateral faster, since two series of measurements may be made per movement of the downhole tool. Adding even more pluralities of transceivers may further increase the redundancy of the tool, the resolution of a determination of a lateral and/or further increase a speed of the determination of a lateral.

Fig. 5 shows a downhole system 200 for determining laterals comprising a driving unit 11 for conveying the downhole tool 1 along the longitudinal axis deeper into the borehole or retracting the downhole tool 1 by a wireline 14. Furthermore, the downhole tool comprises a lateral locator tool 12 for engaging the lateral 2 after the position of the lateral 2 has been determined by the plurality of sonic transceivers 7. By engaging the lateral 2 with a lateral locator tool 12, the downhole tool 1 may be forced to enter the lateral, thereby allowing any operational tools 13 comprised in the tool to enter the lateral 2 and perform the function of the operational tool 13 in the lateral 2. The operational tool 13 may be a logging tool, a key tool, a milling tool or a drilling tool. The system may further comprise a positioning tool using magnets and magnetometers, such as a casing collar locator.

In a method of determining a position of a lateral according to the invention, the downhole tool 1 is moved to a first position in the borehole for initialising the measurement for determining the position of a lateral 2. At this first position of the downhole tool 1, a series of pulse/echo measurements is conducted, i.e. transmitting a sonic signal referred to as a pulse and receiving the reflected sonic signal referred to as an echo. The pulse signal is initially transmitted by a sonic transceiver in a first angular segment 9 radially away from the downhole tool towards the borehole or borehole casing during a first pulse time. The sonic signal is reflected by the borehole or borehole casing back towards the downhole tool and recorded if the reflected sonic signal is received by a sonic transceiver during a first echo time. If no sonic signal is received during the first echo time, it may indicate that the transceiver is facing the lateral in the borehole, since the transmitted sonic signal will be propagating into the lateral instead of being reflected by the borehole or borehole casing. The lack of reflected signal may also be due to the transceiver not being able to receive the reflected signal, but if this is the case, it is confirmed in the subsequent measurement. If there continues to be no reflected signal in a certain angular segment 9, it indicates that a lateral is present as illustrated in Fig. 3c. When the tool is positioned next to a lateral, the transducers facing the lateral have a lower probability of measuring a reflected signal. The probabilities in each direction are different and a probability profile may therefore be used for determining the existence and direction of a lateral. In statistical methods used to derive visible objects, i.e. where the object is directly visible to the observer, the transition probabilities of the object are the only parameters. Statistical methods for uncovering objects not directly visible to the observer, such as a hidden Markov model (HMM), may advantageously be used to derive the existence of a lateral from reflected sonic signals. Since the object is not directly visible when trying to determine laterals, but the output, dependent on the lateral, is visible, i.e. the output near the object, here being a lateral, having a probability distribution over the possible output, statistical models such as the HMM are suitable.

The series of measurements continues in the first position by transmitting a new sonic signal by a neighbouring sonic transceiver in a second angular segment during a subsequent second pulse time, and in the same way the reflected sonic signal is recorded if a sonic transceiver receives the reflected signal during a second echo time. This type of pulse/echo measurements is continued at the first position until all angular segments along the entire circumference of the tool housing have been investigated. Different schemes may be set up for the sequence of pulsing transceivers, transmitting transceivers or receiving transceivers, duration of pulse time, duration of echo time, frequencies, amplitudes etc. To improve redundancy of the method, each of the transceivers receiving the reflected signal may be used to record the reflected signal from one transmitting transceiver by either simultaneously "listening" with all transceivers or "listening" with only one transceiver during the echo time and transmitting a new pulse signal before listening with the next receiver etc. When all angular segments have been investigated, the downhole tool is moved to a second position in the borehole and a second series of pulse/echo measurements is conducted at the second position in the borehole. From the conducted series of measurements, the position of the lateral may be determined from the absence of received reflected sonic signals in a subset of the measurements, since the absence of a reflected signal indicates that the measurement was conducted at a position opposite the position of the lateral.

By placing the downhole tool for determining laterals in a tool string 100 along with other operational tools 13 as mentioned, the tool string 100 may effectively perform tasks in both the borehole wall 3 or main casing and a lateral 2 of the borehole wall 3 or the casing. Furthermore, by using a casing collar locator (CCL) or magnetic profiler, the position of the lateral may be stored in a memory available for the user for future use, which will allow the user to revert to the same lateral faster on subsequent operations.

By the plurality of sonic transceivers being arranged along the circumference of the tool housing, having a mutual distance, and being capable of transmitting sonic signals radially away from the tool housing in an entire central angle of 360 degrees towards the borehole wall or borehole casing is meant that sonic transceivers covering smaller angular segments are placed appropriately along the circumference of the tool. The sonic transceivers thus cover the full centre angle of 360 degrees of the borehole when transmitting and receiving signals.

## Claims

1. A downhole tool (1) for determining laterals in a borehole wall (3) or a borehole casing (4), comprising:
- a tool housing (5) extending along a longitudinal axis (6) and having a circumference perpendicular to the longitudinal axis and adapted to be lowered into a well, and
- a plurality of sonic transceivers (7), each sonic transceiver transmitting sonic signals from the housing and receiving sonic signals (8) reflected from
the borehole wall or borehole casing in a predefined angular segment (9), **characterised in that** the plurality of sonic transceivers are arranged along the circumference of the tool housing having a mutual distance and are capable of transmitting sonic signals radially away from the tool housing in an entire central angle of 360 degrees towards the borehole wall or borehole casing and wherein, during use, one sonic transceiver, during a pulse time, transmits a sonic signal in the predefined angular segment of that sonic transmitter, and wherein one sonic transceiver, during a subsequent echo time, receives a reflected sonic signal from the borehole wall or borehole casing, and wherein an absence of the received reflected sonic signal, during the subsequent echo time, indicates a lateral, and wherein the downhole tool further comprises a magnetic profiler for measuring a magnetic profile of the borehole casing.

2. A downhole tool according to claim 1, wherein the magnetic profiler is capable of applying a magnetic field and measuring a change in the magnetic field.

3. A downhole tool according to claim 2, wherein the change in the magnetic field is measured as a function of an interaction between the borehole casing and the magnetic field.

4. A downhole tool according to any of claims 1-3, wherein the sonic transceivers are arranged equidistantly along the circumference of the tool housing, having a fixed mutual distance.

5. A downhole tool according to any of claims 1-4, wherein the sonic transceivers are arranged along the circumference of the tool housing in a regular pattern.

6. A downhole tool according to any of claims 1-5, wherein more than one transceiver are receiving during the echo time.

7. A downhole tool according to any of the claims 1-6, wherein more than one transceiver are transmitting during the pulse time.

8. A downhole tool according to any of the preceding claims, wherein the downhole tool comprises at least four sonic transceivers, each transceiver being capable of transmitting sonic signals covering at least one fourth of the entire central angle such as at least eight sonic transceivers, each transceiver being capable of transmitting sonic signals covering at least one eighth of the entire central angle.

9. A downhole tool according to any of the preceding claims, wherein the downhole tool comprises an array of sonic transceivers capable of transmitting sonic signals covering the entire central angle.

10. A downhole tool according to any of the preceding claims, wherein a plurality of sonic signals can be transmitted during the pulse time in different predefined angular segments.

11. A downhole tool according to any of the preceding claims, wherein the sonic transceivers are capable of transmitting sonic signals having different predefined amplitudes and phases.

12. A downhole tool according to any of the preceding claims, further comprising a plurality of second sonic transceivers (10) arranged at a longitudinal distance away from the plurality of sonic transceivers and arranged along the circumference of the tool housing having a mutual distance and being capable of transmitting sonic signals radially away from the tool housing in an entire central angle of 360 degrees towards the borehole wall or borehole.

13. A downhole system (200) comprising:
- a wireline (14),
- a tool string (100),
- a driving unit (11),
- a lateral locator (12), and
- an operational tool (13) for operating in a lateral,
wherein the system further comprises a downhole tool for determining laterals according to any of the claims 1-12.

14. A method of determining a position of a lateral comprising the steps of:
- moving the downhole tool according to any of the preceding claims 1-12 to a first position in the borehole,
- conducting a series of pulse/echo measurements comprising:
- transmitting a sonic signal by a sonic transceiver in a first angular segment during a first pulse time,
- recording if a reflected sonic signal is received by a sonic transceiver during a first echo time,
- transmitting a sonic signal by a neighbouring sonic transceiver in a second angular segment during a second pulse time, and
- recording if a reflected sonic signal is received by a sonic transceiver during a second echo time,
- continuing the series of pulse/echo measurements at the first position until all angular segments along the entire circumference of the tool housing have been investigated using the plurality of sonic transceivers,
- moving the downhole tool to a second position in the borehole,
- conducting a second series of pulse/echo measurements at the second position in the borehole,
- determining the position of the lateral from the absence of received reflected sonic signals in a subset of the measurements, indicating the position of the lateral, and
- recording a magnetic profile for each recording by the sonic transceiver.

15. A method according to claim 14, further comprising the step of performing a plurality of measurements using the method according to claim 14 and subsequently combining several recordings by the sonic transceiver having matching recorded magnetic profiles.

## Patentansprüche

1. Bohrlochwerkzeug (1) zum Ermitteln von Seitenarmen in einer Bohrlochwand (3) oder einer Bohrlochverrohrung (4), Folgendes umfassend:
- ein Werkzeuggehäuse (5), das sich entlang einer Längsachse (6) erstreckt und das einen Umfang senkrecht zur Längsachse hat und das dafür eingerichtet ist, in ein Bohrloch herabgelassen zu werden, und
- mehrere Schalltransceiver (7), wobei jeder Schalltransceiver in einem vorgegebenen Winkelsegment (9) Schallsignale vom Gehäuse aussendet und Schallsignale (8) empfängt, die von der Bohrlochwand oder der Bohrlochverrohrung reflektiert werden,
**dadurch gekennzeichnet, dass** die mehreren Schalltransceiver entlang dem Umfang des Werkzeuggehäuses angeordnet sind, wobei sie einen Abstand voneinander haben und dafür eingerichtet sind, Schallsignale vom Werkzeuggehäuse radial nach außen zu senden, in einem vollständigen Zentriwinkel von 360 Grad in Richtung der Bohrlochwand oder Bohrlochverrohrung, und wobei, während des Einsatzes, ein Schalltransceiver in einer Pulszeitspanne ein Schallsignal in einem vorgegebenen Winkelsegment dieses Schalltransceivers aussendet, und wobei ein Schalltransceiver in einer nachfolgenden Echozeitspanne ein reflektiertes Schallsignal von der Bohrlochwand oder Bohrlochverrohrung empfängt, und wobei ein Ausbleiben des empfangenen reflektierten Schallsignals während der nachfolgenden Echozeitspanne einen Seitenarm anzeigt, und wobei das Bohrlochwerkzeug außerdem eine magnetische Registrierungsvorrichtung zum Messen eines magnetischen Profils der Bohrlochverrohrung umfasst.

2. Bohrlochwerkzeug nach Anspruch 1, wobei die magnetische Registrierungsvorrichtung dafür eingerichtet ist, ein Magnetfeld herzustellen und eine Änderung im Magnetfeld zu messen.

3. Bohrlochwerkzeug nach Anspruch 2, wobei die Änderung im Magnetfeld als eine Funktion einer Wechselwirkung zwischen der Bohrlochverrohrung und dem Magnetfeld gemessen wird.

4. Bohrlochwerkzeug nach einem der Ansprüche 1 bis 3, wobei die Schalltransceiver entlang dem Umfang des Werkzeuggehäuses in gleichen Abständen angeordnet sind, wobei sie einen festen Abstand voneinander haben.

5. Bohrlochwerkzeug nach einem der Ansprüche 1 bis 4, wobei die Schalltransceiver entlang dem Umfang des Werkzeuggehäuses in einem regelmäßigen Muster angeordnet sind.

6. Bohrlochwerkzeug nach einem der Ansprüche 1 bis 5, wobei während der Echozeitspanne mehr als ein Transceiver empfängt.

7. Bohrlochwerkzeug nach einem der Ansprüche 1 bis 6, wobei während der Pulszeitspanne mehr als ein Transceiver sendet.

8. Bohrlochwerkzeug nach einem der vorhergehenden Ansprüche, wobei das Bohrlochwerkzeug wenigstens vier Schalltransceiver umfasst und jeder Transceiver dafür eingerichtet ist Schallsignale auszusenden, die wenigstens ein Viertel des vollständigen Zentriwinkels abdecken, wie etwa wenigstens acht Schalltransceiver, wobei jeder Transceiver dafür eingerichtet ist Schallsignale auszusenden, die wenigstens ein Achtel des vollständigen Zentriwinkels abdecken.

9. Bohrlochwerkzeug nach einem der vorhergehenden Ansprüche, wobei das Bohrlochwerkzeug eine Reihe von Schalltransceivern umfasst, die dafür eingerichtet sind, Schallsignale auszusenden, die den vollständigen Zentriwinkel abdecken.

10. Bohrlochwerkzeug nach einem der vorhergehenden Ansprüche, wobei während der Pulszeitspanne mehrere Schallsignale in verschiedenen vorgegebenen Winkelsegmenten ausgesendet werden können.

11. Bohrlochwerkzeug nach einem der vorhergehenden Ansprüche, wobei die Schalltransceiver dafür eingerichtet sind, Schallsignale auszusenden, die unterschiedliche vorgegebene Amplituden und Phasen haben.

12. Bohrlochwerkzeug nach einem der vorhergehenden Ansprüche, das außerdem mehrere zweite Schalltransceiver (10) umfasst, die in einem Längsabstand entfernt von den mehreren Schalltransceivern angeordnet und entlang dem Umfang des Werkzeuggehäuses angeordnet sind, wobei sie einen Abstand voneinander haben und dafür eingerichtet sind, Schallsignale vom Werkzeuggehäuse radial nach außen zu senden, in einem vollständigen Zentriwinkel von 360 Grad in Richtung der Bohrlochwand oder des Bohrlochs.

13. Bohrlochsystem (200), Folgendes umfassend:
- ein Wireline-Kabel (14),
- einen Werkzeugstrang (100),
- eine Antriebseinheit (11),
- einen Seitenarmsucher (12), und
- ein Arbeitswerkzeug (13) für den Betrieb in einem Seitenarm,
wobei das System außerdem ein Bohrlochwerkzeug zum Ermitteln von Seitenarmen nach einem der Ansprüche 1 bis 12 umfasst.

14. Verfahren zum Ermitteln der Position eines Seitenarms, die folgenden Schritte umfassend:
- Bewegen des Bohrlochwerkzeugs nach einem der vorhergehenden Ansprüche 1 bis 12 zu einer ersten Position im Bohrloch,
- Durchführen einer Reihe von Puls/Echo-Messungen, die Folgendes umfassen:
- Aussenden eines Schallsignals durch einen Schalltransceiver in einem ersten Winkelsegment während einer ersten Pulszeitspanne,
- Registrieren, ob ein reflektiertes Schallsignal durch einen Schalltransceiver während einer ersten Echozeitspanne empfangen wird,
- Aussenden eines Schallsignals durch einen benachbarten Schalltransceiver in einem zweiten Winkelsegment während einer zweiten Pulszeitspanne, und
- Registrieren, ob ein reflektiertes Schallsignal durch einen Schalltransceiver während einer zweiten Echozeitspanne empfangen wird,
- Fortführen der Reihe von Puls/Echo-Messungen an der ersten Position bis alle Winkelsegmente entlang dem gesamten Umfang des Werkzeuggehäuses unter Verwendung der mehreren Schalltransceiver untersucht wurden,
- Bewegen des Bohrlochwerkzeugs zu einer zweiten Position im Bohrloch,
- Durchführen einer zweiten Reihe von Puls/Echo-Messungen an der zweiten Position im Bohrloch,
- Ermitteln der Position des Seitenarms aus dem Ausbleiben von empfangenen reflektierten Schallsignalen in einer Teilmenge der Messungen, wodurch die Position des Seitenarms angezeigt wird, und
- Registrieren eines Magnetprofils für jede Registrierung durch den Schalltransceiver.

15. Verfahren nach Anspruch 14, das außerdem den Schritt zum Ausführen mehrerer Messungen unter Verwendung des Verfahrens nach Anspruch 14 umfasst, sowie das nachfolgende Kombinieren mehrerer Registrierungen durch den Schalltransceiver, die übereinstimmende registrierte Magnetprofile haben.

## Revendications

1. Outil de fond de trou (1) conçu pour déterminer des dérivations de conduite dans une paroi de trou de forage (3) ou un tubage de trou de forage (4), comprenant :
- un logement d'outil (5) qui s'étend le long d'un axe longitudinal (6) et qui possède une circonférence perpendiculaire à l'axe longitudinal et est conçu pour être introduit dans un puits, et
- une pluralité d'émetteurs-récepteurs acoustiques (7), chaque émetteur-récepteur acoustique transmettant des signaux acoustiques à partir du logement et recevant des signaux acoustiques (8) réfléchis à partir de la paroi de trou de forage ou à partir du tubage de trou de forage dans un segment angulaire prédéfini (9),
**caractérisé en ce que** la pluralité d'émetteurs-récepteurs acoustiques sont agencés le long de la circonférence du logement d'outil en ayant une distance mutuelle et sont capables de transmettre des signaux acoustiques radialement à partir du logement d'outil dans un angle central entier de 360 degrés vers la paroi de trou de forage ou le tubage de trou de forage et dans lequel, durant l'utilisation, un émetteur-récepteur acoustique, durant une période d'impulsion, transmet un signal acoustique dans le segment angulaire prédéfini de cet émetteur acoustique, et dans lequel un émetteur-récepteur acoustique, durant une période subséquente d'écho, reçoit un signal acoustique réfléchi à partir de la paroi de trou de forage ou à partir du tubage de trou de forage, et dans lequel une absence du signal acoustique réfléchi reçu, durant la période subséquente d'écho, indique une dérivation de conduite, et dans lequel l'outil de fond de trou comprend en outre un profileur magnétique afin de mesurer un profil magnétique du tubage de trou de forage.

2. Outil de fond de trou selon la revendication 1, dans lequel le profileur magnétique est capable d'appliquer un champ magnétique et de mesurer une modification du champ magnétique.

3. Outil de fond de trou selon la revendication 2, dans lequel la modification du champ magnétique est mesurée en fonction d'une interaction entre le tubage de trou de forage et le champ magnétique.

4. Outil de fond de trou selon l'une quelconque des revendications 1 à 3, dans lequel les émetteurs-récepteurs acoustiques sont agencés de manière équidistante le long de la circonférence du logement d'outil, en ayant une distance mutuelle fixée.

5. Outil de fond de trou selon l'une quelconque des revendications 1 à 4, dans lequel les émetteurs-récepteurs acoustiques sont agencés le long de la circonférence du logement d'outil selon un modèle régulier.

6. Outil de fond de trou selon l'une quelconque des revendications 1 à 5, dans lequel plus d'un émetteur-récepteur reçoit durant la période d'écho.

7. Outil de fond de trou selon l'une quelconque des revendications 1 à 6, dans lequel plus d'un émetteur-récepteur transmet durant la période d'impulsion.

8. Outil de fond de trou selon l'une quelconque des revendications précédentes, dans lequel l'outil de fond de trou comprend au moins quatre émetteurs-récepteurs acoustiques, chaque émetteur-récepteur étant capable de transmettre des signaux acoustiques couvrant au moins un quart de l'angle central entier, comme au moins huit émetteurs-récepteurs acoustiques, chaque émetteur-récepteur étant capable de transmettre des signaux acoustiques couvrant au moins un huitième de l'angle central entier.

9. Outil de fond de trou selon l'une quelconque des revendications précédentes, dans lequel l'outil de fond de trou comprend un ensemble d'émetteurs-récepteurs acoustiques capable de transmettre des signaux acoustiques couvrant l'angle central entier.

10. Outil de fond de trou selon l'une quelconque des revendications précédentes, dans lequel une pluralité de signaux acoustiques peuvent être transmis durant la période d'impulsion dans différents segments angulaires prédéfinis.

11. Outil de fond de trou selon l'une quelconque des revendications précédentes, dans lequel les émetteurs-récepteurs acoustiques sont capables de transmettre des signaux acoustiques ayant différentes amplitudes et phases prédéfinies.

12. Outil de fond de trou selon l'une quelconque des revendications précédentes, comprenant en outre une pluralité de seconds émetteurs-récepteurs acoustiques (10) agencés à une distance longitudinale à partir de la pluralité d'émetteurs-récepteurs acoustiques et agencés le long de la circonférence du logement d'outil en ayant une distance mutuelle et étant capables de transmettre des signaux acoustiques radialement à partir du logement d'outil dans un angle central entier de 360 degrés vers la paroi de trou de forage ou le tubage de trou de forage.

13. Système de fond de trou (200) comprenant :
- un câble métallique (14),
- un train d'outils (100),
- une unité d'entraînement (11),
- un localisateur de dérivation de conduite (12), et
- un outil opérationnel (13) destiné à un fonctionnement dans une dérivation de conduite,
dans lequel le système comprend en outre un outil de fond de trou conçu pour déterminer des dérivations de conduite selon l'une quelconque des revendications 1 à 12.

14. Procédé pour la détermination d'une position d'une dérivation de conduite comprenant les étapes de :
- déplacement de l'outil de fond de trou selon l'une quelconque de revendications précédentes 1 à 12 vers une première position dans le trou de forage,
- la réalisation d'une série de mesures d'impulsion/d'écho comprenant :
- la transmission d'un signal acoustique par un émetteur-récepteur acoustique dans un premier segment angulaire durant une première période d'impulsion,
- l'enregistrement de si un signal acoustique réfléchi est reçu par un émetteur-récepteur acoustique durant une première période d'écho,
- la transmission d'un signal acoustique par un émetteur-récepteur acoustique voisin dans un second segment angulaire durant une seconde période d'impulsion, et
- l'enregistrement de si un signal acoustique réfléchi est reçu par un émetteur-récepteur acoustique durant une seconde période d'écho,
- la poursuite de la série de mesures d'impulsion/d'écho au niveau de la première position jusqu'à ce que tous les segments angulaires le long de la circonférence totale du logement d'outil aient été examinés en utilisant la pluralité d'émetteurs-récepteurs acoustiques,
- le déplacement de l'outil de fond de trou vers une seconde position dans le trou de forage,
- la réalisation d'une seconde série de mesures d'impulsion/d'écho au niveau de la seconde position dans le trou de forage,
- la détermination de la position de la dérivation de conduite à partir de l'absence de signaux acoustiques réfléchis reçus dans un sous-ensemble des mesures, indiquant la position de la dérivation de conduite, et
- l'enregistrement d'un profil magnétique pour chaque enregistrement par l'émetteur-récepteur acoustique.

15. Procédé selon la revendication 14, comprenant en outre l'étape de réalisation d'une pluralité de mesures en utilisant le procédé selon la revendication 14 et la combinaison ensuite de plusieurs enregistrements par l'émetteur-récepteur acoustique ayant des profils magnétiques enregistrés correspondants.
